# EUROPEAN PATENT APPLICATION

(11) **EP 1 925 869 A1**
(43) Date of publication of application: **28.05.2008**
(21) Application number: 07121057.9
(22) Date of filing: 19.11.2007
(51) Int. Cl.: F16L 23/026

(54) **Pneumatic tube assembly for electrical bonding of pneumatic components**

(30) Priority: 21.11.2006 US 602562
(71) Applicant: Honeywell International, Inc., Morristown, NJ 07962 (US)
(72) Inventor: Atkins, Don J., Chandler, AZ 85224 (US); Tornquist, David B., Chandler, AZ 85226 (US); Lombardi, Jay W., Phoenix, AZ 85048 (US); Denike, Stuart K., Phoenix, AZ 85048 (US); Robb, Scott, Chandler, AZ 85248 (US); McGinty, Mitchell A., Phoenix, AZ 85044 (US); Kelly, Larry R., Chandler, AZ 85248 (US)
(74) Representative: Buckley, Guy Julian

(57) **Abstract**

A valve assembly (150) is provided including at least one pneumatic component (104) and a pneumatic tube assembly (120) fixedly coupled to the at least one pneumatic component (104). The pneumatic tube assembly (120) includes a pneumatic tube (122) and at least one tube retaining plate (126). The at least one tube retaining plate (126) is fixedly coupled about the pneumatic tube (122) by a weld or brazing process. The at least one tube retaining plate (126) further includes a portion positioned in bonding engagement with a bonding surface of the at least one pneumatic component (104). A retaining bolt (116) mechanically retains the at least one tube retaining plate (126) to the bonding surface. The retaining bolt (116) and the at least one tube retaining plate (126) provide a bonding path between the pneumatic tube (122) and the at least one pneumatic component (104).

## Description

### FIELD OF THE INVENTION

The present invention generally relates to a valve assembly and, more particularly, to a pneumatic valve assembly including a pneumatic tube assembly for dissipation of static electrical discharge.

### BACKGROUND OF THE INVENTION

Many relatively large turbine engines use pneumatic valves for the control of fluid there through. Some specific examples of pneumatic valves utilized in turbine engines include high stage bleed air valves, mid-stage bleed air valves, bleed air isolation valves, pressure regulating and shutoff valves, load control valves, anti-ice valves, trim air valves, and temperature control valves.

In one specific example, an air turbine starter (ATS) within a turbofan jet engine may be coupled to a high pressure fluid source such as compressed air. The flow of compressed air may be controlled by, for example, a valve, such as a pneumatic valve. The flow of compressed air impinges upon a turbine wheel in the ATS causing it to rotate at a relatively high rate of speed.

It is well-known that pneumatic valve assemblies may be partially disposed within an airway to control flow of a fluid (e.g., air) there through and thus perform any one of a number of functions (e.g., temperature regulation). Valve assemblies of this type typically comprise a valve (e.g., a butterfly valve) that is coupled by way of a linkage assembly to an actuator. During operation, static electrical discharge is generated by the valve assembly and may damage the turbine engine as well as other aircraft systems. Previous attempts to alleviate this problem include the fastening of a p-clamp and/or ground strap to a portion of the pneumatic tubing coupled to the valve assembly and the attachment of the p-clamp and/or ground strap to a remote ground point, such as an associated component. The p-clamp or ground strap provides a discharge path for the static electricity in the device. Although this type of bonding or grounding of the valve operates safely this method can suffer certain drawbacks. For instance, the p-clamp may rotate or move about the pneumatic tubing and/or corrode about the tubing where clamping takes place. This relative motion of the p-clamp or ground strap and corrosion about the clamp can potentially result in an increase in the bonding resistance across the joint and the build up of static electricity within the valve assembly.

It should thus be appreciated from the above that it would be desirable to provide an improved valve assembly including a means for bonding the assembly for the discharge of static electricity during operation of the valve assembly. Furthermore, other desirable features and characteristics of the present invention will become apparent from the subsequent detailed description of the invention and the appended claims, taken in conjunction with the accompanying drawings and this background of the invention.

### BRIEF SUMMARY OF THE INVENTION

There has now been developed a pneumatic tube assembly, comprising a pneumatic tub; and at least one retaining plate coupled to the pneumatic tube and at least one pneumatic component and providing a bonding path between the pneumatic tube and the at least one pneumatic component. The retaining plate comprises a first surface, an opposed second surface, and a first opening extending between the first surface and the opposed second surface. The retaining plate further comprises a second opening extending between the first surface and the opposed second surface, and through which the pneumatic tube extends.

In a further embodiment, still by way of example only, there is provided a valve assembly, comprising at least one valve body having a flow passage and a tube insertion bore formed therein and a pneumatic tube assembly disposed within the tube insertion bore. The pneumatic tube assembly comprises a pneumatic tube, at least one retaining plate coupled to the pneumatic tube and the at least one valve body and providing a bonding path between the pneumatic tube and the at least one valve body. The retaining place comprises a first surface, an opposed second surface, a first opening extending between the first surface and the opposed second surface, and a second opening extending between the first surface and the opposed second surface, and through which the pneumatic tube extends.

In still a further embodiment, and still by way of example only, there is provided a valve assembly, comprising at least one valve body having a flow passage and a tube insertion bore formed therein, a pneumatic tube disposed within the tube insertion bore, and fixedly coupled to the valve body, and at least one retaining plate coupled to the pneumatic tube and the at least one valve body and providing a bonding path between the pneumatic tube and the at least one valve body. The at least one retaining plate comprising a first surface, an opposed second surface, a first opening extending between the first surface and the opposed second surface, a second opening extending between the first surface and the opposed second surface and through which the pneumatic tube extends, and a retaining sleeve defined by a sidewall extending substantially perpendicular to the second surface and in alignment with the second opening.

Other independent features and advantages of the improved valve assembly and pneumatic tube assembly will become apparent from the following detailed description, taken in conjunction with the accompanying drawings which illustrate, by way of example, the principles of the invention.

### BRIEF DESCRIPTION OF THE DRAWINGS

The present invention will hereinafter be described in conjunction with the following drawing figures, wherein like numerals denote like elements, and:

FIG. 1 is a cross-sectional diagram of a known pneumatic valve assembly;

FIG. 2 is a simplified isometric view of a pneumatic tube assembly according to the present invention;

FIG. 3 is a simplified isometric view of an alternate embodiment of a pneumatic tube assembly according to the present invention;

FIG. 4 is a simplified isometric view of a tube retaining plate according to the present invention;

FIG. 5 is a cross-sectional diagram of a pneumatic valve assembly including a pneumatic tube assembly according to the present invention;

FIG. 6 is an isometric view of a pneumatic valve assembly according to the present invention; and

FIG. 7 is an isometric view of a pneumatic valve assembly including a first pneumatic component and a second pneumatic according to the present invention.

### DETAILED DESCRIPTION OF THE INVENTION

The following detailed description of the invention is merely exemplary in nature and is not intended to limit the invention or the application and uses of the invention. Furthermore, there is no intention to be bound by any theory presented in the preceding background of the invention or the following detailed

### description of the invention.

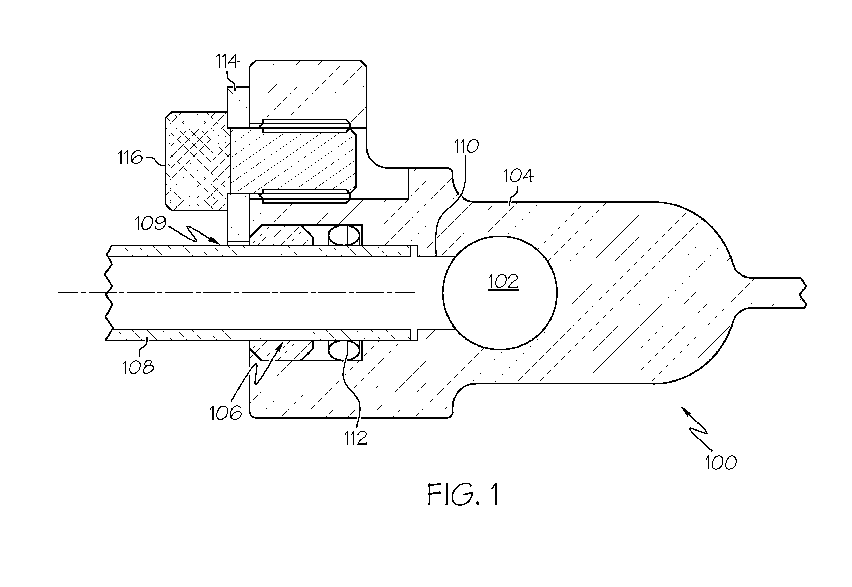

FIG. 1 is a cross-sectional view of a portion of a conventional valve assembly 100. The valve assembly 100 is configured to control the flow of a fluid (e.g., pressurized air) through a flow passage 102 (e.g., an airway) defined by a valve housing 104. The valve assembly 100 may be pneumatically operated with a source of pressurized air. Typically, the valve assembly 100 will include an electromagnetic actuator assembly, such as a solenoid (not shown) that is mounted to the valve housing 104. Those having ordinary skill in the art will appreciate from the description that follows that the exact form of the actuator, whether electromagnetic or otherwise, forms no part of the present invention. A valve closure element is typically disposed within the valve housing 104, and more particularly the flow passage 102. The valve closure element is coupled to a valve actuator, and is configured to move between a closed position and an open position. In the closed position, the valve closure element substantially prevents airflow through the flow passage 102. In contrast, when the valve closure element is in an open position, air may flow through the flow passage 102.

The valve housing 104 further includes a tube insertion bore 110 that extends through a portion of the valve housing 104 into which a pneumatic tube 108 is positioned. The pneumatic tube 108 is seated upon a portion of the valve housing 104 and held in sealing engagement with the valve housing 104 by an o-ring 112, or the like. A tube sleeve 106 is positioned within tube insertion bore 110 and about the pneumatic tube 108. A separately formed tube retaining plate 114 in conjunction with a retaining bolt 116 provides a means for retaining the pneumatic tube 108 within the valve housing 104. The tube retaining plate 114 is positioned to exert a force upon a sidewall of the pneumatic tube 108 at a joint 109, thereby retaining it in place. This means of retaining the pneumatic tube 108 within the valve housing 104 is sufficient in many applications, yet during operation it is susceptible to motion of the pneumatic tube 108 relative to the tube retaining plate 104. In addition, the tube retaining plate 114, the tube sleeve 106 and the pneumatic tube 108 are subject to corrosion and thus a subsequent increase in bonding resistance across these attachment joints. Furthermore, to achieve bonding of the valve assembly 100, a grounding strap may need to be incorporated in cooperation with the tube retaining plate 114 to allowing a bond path to exist between the pneumatic tube 108 and the valve housing 104.

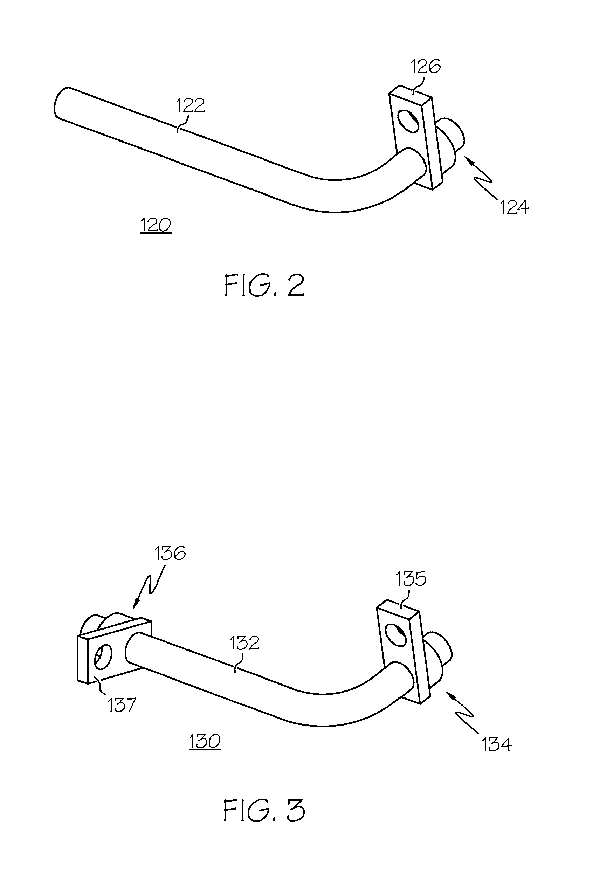

Referring now to FIG. 2, illustrated in simplified isometric view is a pneumatic tube assembly 120 according to the present invention. The pneumatic tube assembly 120 is comprised of a pneumatic tube 122, having a first end 124 and a second end 125. A single tube retaining plate 126, formed of a corrosion resistant metal, is positioned at the first end 124 and coupled to the pneumatic tube 122 using standard brazing or welding techniques. The brazing or welding process provides a means for securely retaining the pneumatic tube 122 to the tube retaining plate 126.

Referring now to FIG. 3 illustrated in simplified isometric view is a pneumatic tube assembly 130 according to another embodiment of the present invention. The pneumatic tube assembly 130 is comprised of a pneumatic tube 132, having a first end 134 and a second end 136. A first tube retaining plate 135 is positioned at the first end 134 and a second tube retaining plate 137 is positioned at the second end 136. Each of the tube retaining plates 135 and 137 is formed of a corrosion resistant metal and coupled to the pneumatic tube 132 using standard brazing or welding techniques. The brazing or welding process provides a further means for securely retaining the pneumatic tube 132 to the first tube retaining plate 135 and the second tube retaining plate 137.

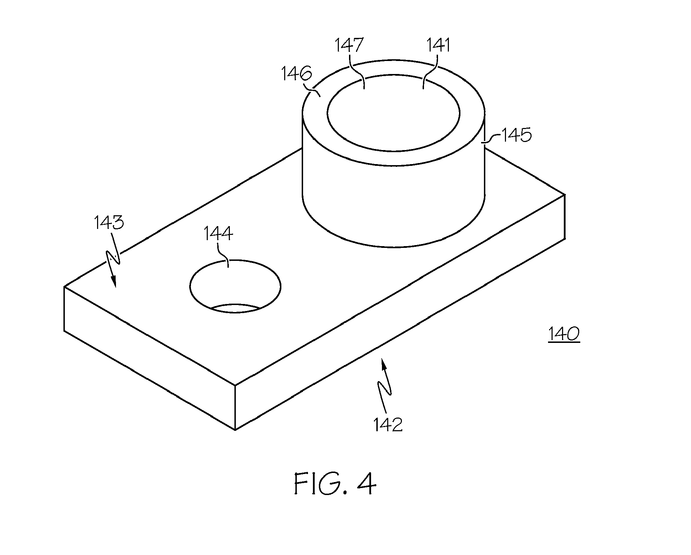

Referring now to FIG. 4, illustrated is a tube retaining plate 140, generally similar to the tube retaining plate 126 of FIG. 2, and the first tube retaining plate 135 and the second tube retaining plate 137 of FIG. 3. The tube retaining plate 140 includes a first opening 141 that extends from a first surface 142 of the tube retaining plate 140 to an opposed second surface 143 of the tube retaining plate 140. In addition, the tube retaining plate 140 includes a second opening 144 that extends from the first surface 142 of the tube retaining plate 140 through the second surface 143 of the tube retaining plate 140. The tube retaining plate 140 further includes a retaining sleeve 145 defined by a sidewall 146 that extends substantially perpendicular to the second surface 143 and has an inner surface 147 that defines the first opening 141. The retaining sleeve 145 is formed in alignment with the first opening 141.

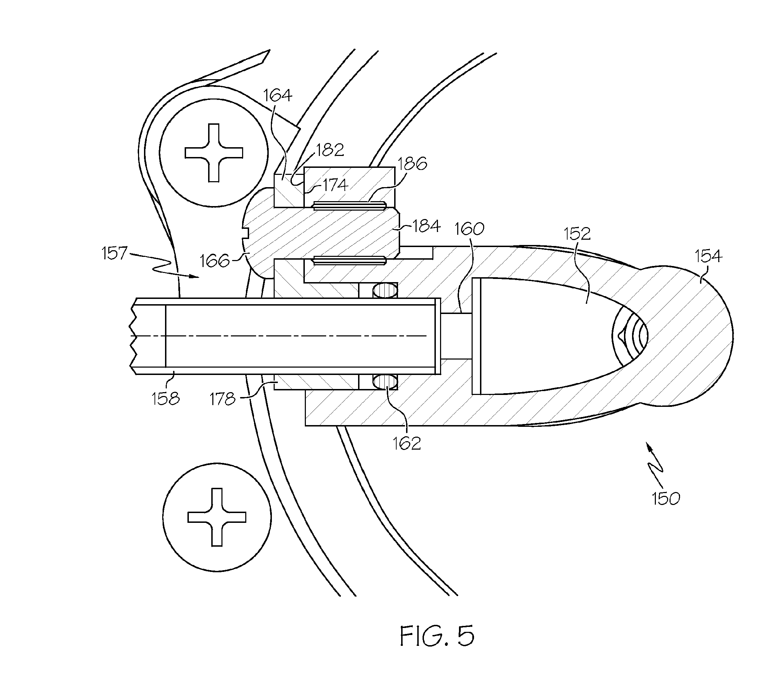

Referring now to FIG. 5, illustrated in simplified cross-sectional view is a portion of a pneumatic component, and more particularly a pneumatic valve assembly 150 according to a preferred embodiment of the present invention. Valve assembly 150 is configured to control the flow of a fluid (e.g., pressurized air) through a flow passage 152 (e.g., an airway) defined by a one-piece valve housing 154, also referred to herein as a valve body. The valve assembly 150 may be pneumatically operated with a source of pressurized air. As previously described, the valve assembly 150 may include an electromagnetic actuator assembly, such as a solenoid (not shown) that is mounted to the valve housing 154. A valve element (not shown) is disposed within the valve housing 154, and more particularly the flow passage 152. The valve element is coupled to the valve actuator assembly and is configured to move between a closed position and an open position during operation.

The valve assembly 150 further includes a tube insertion bore 160 that extends through a portion of the valve housing 154 into which a pneumatic tube assembly 157, and more particularly a pneumatic tube 158 is positioned. The pneumatic tube 158 is seated upon a portion of valve housing 154 and held in sealing engagement with the valve housing 154 by an o-ring 162.

A tube retaining plate 164 in conjunction with a retaining bolt 166 provides mechanical retention and electrical bonding of the pneumatic tube 158 and the valve housing 154. As previously stated, in a preferred embodiment, the tube retaining plate 164 is formed of a corrosion resistant steel, such as stainless steel. More particularly in a preferred embodiment, the tube retaining plate 164 is formed of CRES 316L commonly used in high-pressure hydraulic/pneumatic 18-8 (low carbon) systems. The tube retaining plate 164 provides electrical bonding of the pneumatic tube 158 and the valve housing 154, and more specifically provides a means for the dissipation of static electricity during operation of the pneumatic valve assembly 150.

When the tube retaining plate 164 is properly positioned relative to the valve assembly 150, the second surface 174 of the tube retaining plate 164 abuts with a portion of the surface of the valve housing 154, which serves as a bonding surface 182. The retaining sleeve 178 is positioned within a portion of the tube insertion bore 160 formed in the valve housing 104, and the pneumatic tube 158 is positioned through the opening 170 formed in the tube retaining plate 164 and in sealing engagement with the valve housing 154. The pneumatic tube 158 has an exterior dimension substantially less that of the opening 170 formed in the tube retaining plate 164 to allow for the positioning therein within close tolerance. A retaining bolt 166, including a plurality of threads 184, is positioned through the opening 176 and into a threaded bore 186 formed in a portion of the valve housing154. The retaining bolt 166 provides mechanical retention of the tube retaining plate 164 against the bonding surface 182 and generates a grounding path through contact force.

Subsequent to positioning the pneumatic tube 158 relative to the valve assembly 150, the pneumatic tube 158 is brazed or welding to the tube retaining plate 164. The brazing or welding process provides a further means for securely retaining the pneumatic tube 158 within the retaining sleeve 178 and thus to the valve housing 154. In contrast to the prior art valve previously described with regard to FIG. 1, this mechanical retention of the tube retaining plate 164 to the pneumatic tube 158 provides a low electrical resistance path between the pneumatic tube 158 and the valve housing 154. Accordingly, a bond path exists between the pneumatic tube assembly, comprising the pneumatic tube 158, the tube retaining plate 164, and the retaining bolt 166, and the valve housing 154. This positive means of attaching the pneumatic tube 158 to the valve housing 154 eliminates motion of the pneumatic tube 158 relative to the tube retaining plate 164 and prevents any chance of corrosion and subsequent increase in bonding resistance across the joint. In addition, the tube retaining plate 164 eliminates the incorporation of a grounding strap into the valve assembly 150 by allowing a bond path to exist between the pneumatic tube assembly and the valve housing 154.

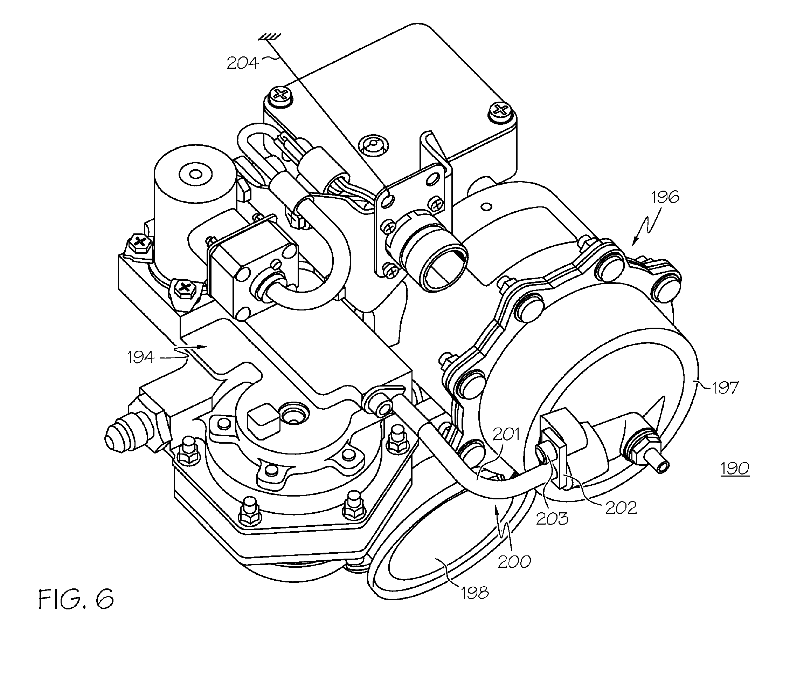

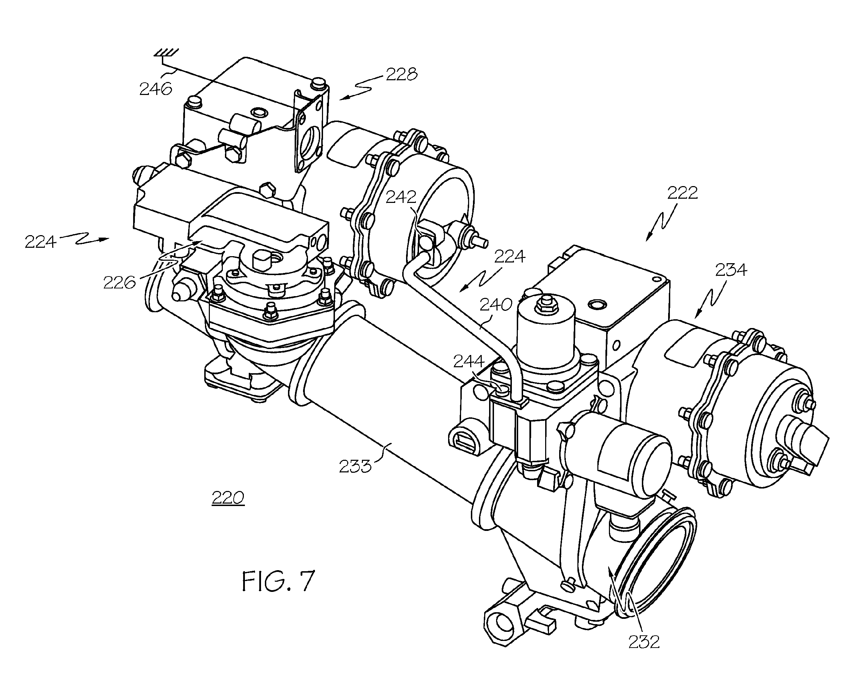

Referring now to FIGs. 6 and 7 illustrated in simplified isometric views are a plurality of valve assemblies including a pneumatic tube assembly, according to the present invention. More specifically, illustrated in FIG. 6 is a valve assembly 190 comprising an actuator assembly 196, including an actuator housing 197, and a servo housing, generally referenced 194, and a flow passage 198. The valve assembly 190 further includes a pneumatic tube assembly 200 generally comprised of a pneumatic tube 201 and a tube retaining plate 202. The pneumatic tube assembly 200 provides bonding and thus electric discharge of static electricity that may build up in the pneumatic tube 201 during operation. The pneumatic tube assembly 200 is formed generally similar to the pneumatic tube assembly 120 of FIG. 2, having a single tube retaining plate 202 positioned at a first end. A retaining bolt 203 mechanically retains the tube retaining plate 202 to a bonding surface (not shown) of the actuator housing 197. In combination, the retaining bolt 203, the pneumatic tube 201, and the tube retaining plate 202 provide a bonding path from the pneumatic tube 201 through the actuator assembly 196 and to a ground, generally referenced 204.

Referring now to FIG. 7, illustrated is a valve assembly 220, including a first pneumatic component 221, such as a pneumatic valve assembly, and a second pneumatic component 222, such as a pneumatic valve assembly. The first pneumatic component 221 is generally comprised of an actuator assembly 228 and a servo housing 226. Similarly, the second pneumatic component 222 is generally comprised of an actuator assembly 234 and a servo housing 232. A flow passage 233 and a pneumatic tube assembly 224 couple the first pneumatic component 221 to the second pneumatic component 222. More specifically, a pneumatic tube assembly 224, generally comprised of a pneumatic tube 240, having formed at a first end and second end respectively, a first tube retaining plate 242 and a second tube retaining plate 244 couples the plurality of pneumatic components 221 and 222. A plurality of retaining bolts (not shown) mechanically retain the tube retaining plate 242 to a bonding surface of the first pneumatic component 221 and the tube retaining plate 244 to a bonding surface of the second pneumatic component 222. The pneumatic tube assembly 224 provides a bonding path between the first pneumatic component 221 and the second pneumatic component 222 and the discharge of static electricity that may build up in the second pneumatic component 222 during operation. More specifically, the pneumatic tube assembly 224 provides a bonding path for the second pneumatic component 222 through the actuator assembly 228 of the first pneumatic component to a ground, generally referenced 246. In addition, any static electrical build up that occurs within the pneumatic tube 240 will be discharged.

Accordingly, disclosed is an improved valve assembly including a means for bonding the valve assembly to dissipate static electricity. While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A pneumatic tube assembly (120), comprising:
a pneumatic tube (122); and
at least one retaining plate (140) coupled to the pneumatic tube (122) and at least one pneumatic component (104) and providing a bonding path between the pneumatic tube (122) and the at least one pneumatic component (104) the retaining plate (126) comprising:
a first surface (142);
an opposed second surface (143);
a first opening (141) extending between the first surface (142) and the opposed second surface (143);
a second opening (144) extending between the first surface (142) and the opposed second surface (143), and through which the pneumatic tube (122) extends.

2. A pneumatic tube assembly (120) according to claim 1, wherein the at least one tube retaining plate (140) comprises a retaining sleeve (145) fixedly coupled to the pneumatic tube (122), the retaining sleeve (145) having an interior dimension slightly greater than an exterior dimension of the pneumatic tube (122).

3. A pneumatic tube assembly (120) according to claim 1, wherein the at least one retaining sleeve (145) extends substantially perpendicular from the second surface (143) of the tube retaining plate (140) and into the tube insertion bore (110) and includes an inner surface (147) that defines the second opening(144).

4. A pneumatic tube assembly (120) according to claim 1, wherein the pneumatic tube (122) and the at least one tube retaining plate (140) are fixedly coupled by a weld.

5. A pneumatic tube assembly (120) according to claim 1, wherein the pneumatic tube (122) and the at least one retaining plate are fixedly coupled by brazing.

6. A pneumatic tube assembly (220) according to claim 1, wherein the pneumatic tube assembly (220) comprises a first retaining plate (242) and a second retaining plate (244) providing a bonding path between a first pneumatic component (221) and a second pneumatic component (222).

7. A pneumatic tube assembly (120) according to claim 1, wherein the tube retaining plate (140) is comprised of corrosion resistant steel.

8. A valve assembly (150), comprising:
at least one valve body (154) having a flow passage (152) and a tube insertion bore (160) formed therein;
a pneumatic tube assembly (157) disposed within the tube insertion bore (160), the pneumatic tube assembly (157) comprising:
a pneumatic tube (158);
at least one retaining plate (164) coupled to the pneumatic tube (158) and the at least one valve body (154) and providing a bonding path between the pneumatic tube (158) and the at least one valve body (154), the retaining plate (164) comprising:
a first surface (142);
an opposed second surface (143);
a first opening extending between the first surface (142) and the opposed second surface (143);
a second opening extending between the first surface (142) and the opposed second surface (143), and through which the pneumatic tube (158) extends.

9. A valve assembly (150) according to claim 8, wherein the at least one tube retaining plate (164) comprises a retaining sleeve (178) fixedly coupled to the pneumatic tube (158), the retaining sleeve (178) having an interior dimension slightly greater than an exterior dimension of the pneumatic tube (158).

10. A valve assembly (150) according to claim 8, wherein the retaining sleeve (178) extends substantially perpendicular from the second surface (174) of the tube retaining plate (164) and into the tube insertion bore (160) and includes an inner surface (147) that defines the second opening.
